# EUROPÄISCHE PATENTSCHRIFT

(11) **EP 2 079 964 B1**
(45) Veröffentlichungstag und Bekanntmachung des Hinweises auf die Patenterteilung: **08.08.2012**
(21) Anmeldenummer: 07821043.2
(22) Anmeldetag: 09.10.2007
(51) Int. Cl.: F24C 7/08

(54) **HAUSHALTSGERÄT MIT DREHKNEBEL**
DOMESTIC APPLIANCE WITH ROTARY KNOB
APPAREIL MÉNAGER À BOUTON ROTATIF

(30) Priorität: 12.10.2006 DE 102006048418
(43) Veröffentlichungstag der Anmeldung: 22.07.2009
(73) Patentinhaber: BSH Bosch und Siemens Hausgeräte GmbH, 81739 München (DE)
(72) Erfinder: SEGERS, Hermann-Reinhard, 81679 München (DE)
(86) Internationale Anmeldenummer: PCT/EP2007/060671
(87) Internationale Veröffentlichungsnummer: WO 2008/043742

(56) Entgegenhaltungen:
- EP-A- 1 107 647
- EP-A- 1 347 242
- EP-A1- 0 497 191
- WO-A-2004/038298
- DE-A1- 4 432 399
- DE-A1-102006 026 187
- DE-B3-102007 016 466
- DE-C1- 10 063 693
- DE-U1- 29 908 610

## Beschreibung

Die Erfindung betrifft allgemein ein Haushaltsgerät mit einem abnehmbar angebrachtes Bedienelement, einem Kochfeld und mit einem daran angrenzenden Muldenrahmen, z. B. einen Herd oder eine eigenständige Kochplatte.

Allgemein bekannt sind Haushaltsgeräte, bei denen ein Drehknebel auf einem Funktionsfeld angeordnet ist. So sind zum Beispiel Herde mit Ceramkochfeld bekannt, wobei ein Drehknebel zur Bedienung der Kochstellen, z. B. zur Einstellung von Kochstufen, abnehmbar auf dem Ceranfeld angebracht ist. Dies ergibt den Vorteil eines schmalen Rahmens und somit eines vergleichsweise großen Kochfeldes. Nachteilig ist es jedoch, dass der Drehknebel nicht nur abnehmbar ist, sondern durch den Benutzer bei stärkerer Kraftaufbringung auch unbeabsichtigt seitlich verschiebbar ist. Dabei wird dem Benutzer aufgrund einer dem Stick-Slip-Effekt ähnlichen Verschiebung keine optimale haptische Rückkopplung gegeben.

Zur festen Positionierung beispielsweise eines Drehknebels kann dieser auch vollständig im Rahmen bzw. einer Bedienblende eingelassen sein. Beispielsweise aus DE 43 18 206 A1 ist eine Erhitzungsvorrichtung, insbesondere Mikrowelle, gezeigt, bei der frontseitig ein Drehknebel zum Wärmstart und zur Geräteeinstellung vorhanden ist, wobei der Drehknebel in eine Ausbuchtung eines sonst schlanken Rahmens in ein Anzeigefeld hinein eingelassen ist.

Bei Herden mit fest eingebautem Drehknebel wird dieser meist in einen breiten Rahmen eingebaut. DE 1197 06 278 A1 offenbart eine frontseitige Herdbedienblende, bei der, um einen Drehknebel aufnehmen zu können, der Blendenrahmen im Bereich des Drehknebels eine Ausbuchtung in das Funktionsfeld in Form eines Anzeigefelds erfährt.

DE 44 32 399 A1 betrifft einen Schalter mit einem in Umfangsrichtung drehbaren, im wesentlichen kreisförmigen Rotor und mit einem in Abhängigkeit von der Winkelstellung des Rotors Schaltbefehle abgebenden Stator, bei dem Rotor und Stator durch eine Bedienfläche eines Gerätes, insbesondere eines Haushaltgerätes getrennt sind, wobei der Rotor ein Gehäuseteil mit mindestens einem in dessen Randbereich angeordneten Permanentmagneten beinhaltet, der auf mindestens ein im Stator befindliches, dem Randbereich des Gehäuseteils zugeordnetes magnetempfindliches Schaltelement wirkt. Um die Wahlmöglichkeit bei einem solchen Schalter mit einfachen Mitteln zu vergrößern, ist ein zweites, in axialer Richtung bewegliches Gehäuseteil vorgesehen, welches in seinem Zentrum einen weiteren Permanentmagneten aufnimmt, wobei im Stator ein ebenfalls magnetempfindliches Schaltelement zugeordnet ist.

EP 1 107 647 A2 offenbart eine Steuerung für ein Elektrogerät, das mindestens eine einem Arbeitsbereich zugeordnete elektrische Funktionseinrichtung aufweist, insbesondere für ein Elektrokochgerät mit Heizelement und einem Glaskeramikfeld als Arbeitsbereich. Die Steuerung hat eine Leistungseinheit zur Beaufschlagung der Funktionseinrichtung mit elektrischer Leistung sowie eine zur Steuerung der Leistungseinheit an diese angepasste Steuereinheit. Die Steuereinheit ist in einer von dem Elektrogerät gesonderten Bedieneinheit untergebracht, die Bedienelemente und Anzeigeeinrichtungen zur Anzeige von Betriebszuständen des Elektrogerätes oder der Steuerung umfasst. Zur steuerwirksamen Verbindung zwischen Steuereinheit und Leistungseinheit ist eine seitlich neben dem Glaskeramikkochfeld angeordnete Ankopplungseinrichtung vorgesehen, die eine Anbringung der Bedieneinheit außerhalb des Glaskeramikkochfeldes in einer Andockstellung ermöglicht, in der die Steuereinheit und die Leistungseinheit steuerwirksam verbunden sind. Die Erfindung vereinigt ein Höchstmaß an Bedienkomfort und Funktionssicherheit der Steuerung mit einer optimalen Freiheit bei der Nutzung des gesamten Arbeitsbereiches.

EP 0 497 191 A1 betrifft Verfahren zur Ansteuerung des Betriebs eines Kochgeräts. Um die Leistung der Platten eines Glaskeramikkochfeldes zu stellen, wird mittels eines entfernbaren, mechanisch geführten Schiebers magnetisch durch die Glaskeramikplatte durchgegriffen, und es werden darunterliegende Reed-Schalter entsprechend der jeweiligen Position des Schiebers aktiviert.

Es ist daher die Aufgabe der vorliegenden Erfindung, eine Möglichkeit für ein Haushaltsgerät zu schaffen, eine Möglichkeit zu verbesserten Handhabbarkeit abnehmbarer Bedienelemente bereitzustellen, insbesondere für Herde.

Die Aufgabe wird durch ein Haushaltsgerät nach Anspruch 1 gelöst. Vorteilhafte Ausgestaltungen sind insbesondere der Unteransprüchen einzeln oder in Kombination entnehmbar.

Das Haushaltsgerät ist mit einer Oberfläche, die ein Funktionsfeld, ein am Funktionsfeld angebrachtes Bedienelement und einen an das Funktionsfeld angrenzenden Rahmen - z. B. eine Bedienblende - umfasst, ausgerüstet, wobei das Bedienelement zumindest teilweise durch den Rahmen geführt wird.

Dadurch bleibt die Abnehmbarkeit erhalten, aber der Widerstand gegen eine Verschiebung wird erhöht. Zudem wird, zumindest in einer durch den Rahmen begrenzten Richtung, die haptische Rückkopplung durch die Rahmenführung stark verbessert

Die Erfindung ist bei Haushaltsgeräten vorteilhaft anwendbar, die eine Kochplatte aufweisen, wobei das Funktionsfeld ein Kochfeld ist und der Rahmen ein Muldenrahmen ist, z. B. bei Herden oder Varios.

Das Bedienelement ist ein Drehknebel.

Erfindungsgemäß ist das Bedienelement zumindest teilweise in einer randseitigen Aufnahme des Rahmens angeordnet. Die Aufnahme kann vorteilhafterweise eine Vertiefung im Rahmen sein, insbesondere, wenn der Rahmen gegenüber dem Funktionsfeld hochsteht, insbesondere zwischen 1 mm und 3 mm. Zur einfachen Bedienung des Bedienelements schließt die Vertiefung am Funktionsfeld bündig an. Die Vertiefung kann aber auch gegenüber dem Funktionsfeld tiefer liegen, um eine Mulde in der Oberfläche zu bilden, was eine zusätzliche Führung bietet, aber aufwendiger herzustellen ist.

Die Aufnahme kann vorteilhafterweise auch eine Aussparung im Rahmen sein, so dass das Bedienelement auf dem Funktionsfeld angebracht ist und durch den Rahmen im wesentlichen nur seitlich geführt wird. Der Boden der Aussparung wird somit durch das Funktionsfeld gebildet.

Es ist günstig, wenn das Funktionsfeld eine Glaskeramikplatte oder glaskeramikähnliche Platte aufweist, z. B. ein Ceranfeld eines Kochfelds.

Es ist für alle Lösungen vorteilhaft, wenn das abnehmbare Bedienelement magnetisch am Haushaltsgerät befestigt wird, da so eine ausreichende Haftung bei gleichzeitiger Verschiebbarkeit und / oder Drehbarkeit gewährleistet wird.

Es ist dann vorteilhaft, wenn eine Betätigung des Bedienelements durch eine dadurch verursacht Änderung des Magnetfelds zwischen Bedienelement und Haushaltsgerät sensiert wird.

Es ist zur erhöhten Bedienerfreundlichkeit vorteilhaft, wenn das Funktionsfeld, ein Kochfeld, im Bereich des Bedienelements mindestens ein zum Bedienelement zugehöriges Anzeigenfeld aufweist.

Es kann zur verbesserten Benutzerführung auch vorteilhaft sein, wenn das Funktionsfeld, ein Kochfeld, im Bereich des Bedienelements mindestens ein zum Bedienelement zugehöriges weiteres Bedienelement, insbesondere ein berührungsempfindliches Bedienelement, aufweist, z. B. eine Taste.

In den folgenden Ausführungsbeispielen wird die Erfindung schematisch näher erläutert. Gleichwirkende Elemente werden mit gleichen Bezugszeichen bezeichnet.
- FIG 1: zeigt eine Aufsicht auf eine Kochplatte eines Herdes gemäß einer ersten Ausführungsform;
- FIG 2: zeigt eine Aufsicht auf die Kochplatte nach FIG 1 in einer ersten Bedienkonfiguration;
- FIG 3: zeigt eine Aufsicht auf die Kochplatte nach FIG 1 in einer zweiten Bedienkonfiguration;
- FIG 4: zeigt eine Aufsicht auf eine Kochplatte eines Herdes gemäß einer zweiten Ausführungsform;

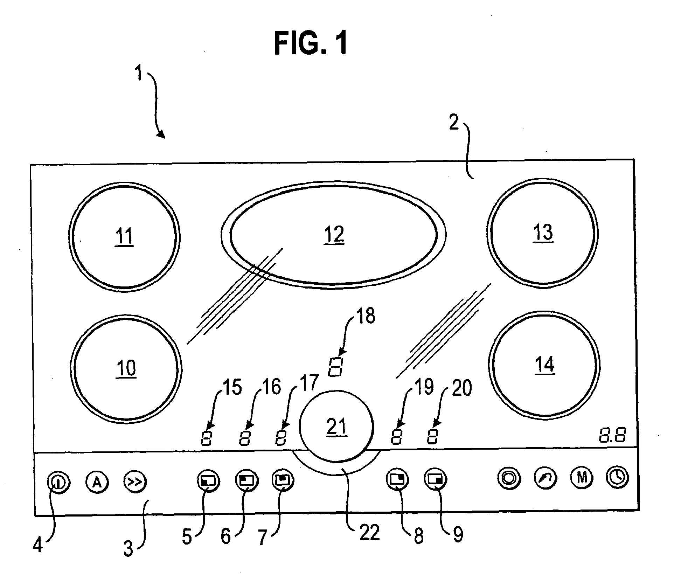

FIG 1 zeigt eine Aufsicht auf eine Kochplatte eines Herdes 1, die im wesentlichen eine Oberfläche mit einem GlaskeramikKochfeld 2 als Funktionsfeld, einen daran einseitig angrenzenden Muldenrahmen 3 sowie verschiedene Bedienelemente umfasst. Die Bedienelemente eines Herds 1 als solche sind allgemein bekannt, so dass nur auf einige genauer eingegangen wird Im Muldenrahmen 3 sind ein An/Rus-Schalter 4 und, Aktivierungsschalter 5 - 9 für entsprechende Kochstellen 10 - 14 eingelassen. Am Kochfeld angeordnet sind Anzeigefelder für die Kochstellen, deren Symbole allgemein bekannt sind und von denen im folgenden zur Beschreibung nur die zu jeweils einer Kochstelle 10 - 14 zugehörige Kochstufenanzeige 15 - 20 mit einem Bezugszeichen versehen ist, wobei die Kochstufonanzeige 15 - 20 als 7-Segmentanzeige für einen maximalen Kochstufenbereich von 0 (aus) bis 9 (maximale Heizleistung) ausgelegt ist. In der gezeigten Ausfühungsform kann für die zentrale Kochstelle 12 zwischen zwei Anzeigefeldern 17, 18 umgeschaltet wenden.

Auf dem Kochfeld 2 angebracht ist ferner ein abnehmbarer Drehknebel 21, der teilweise in einer randseitigen Aufnahme 22 des Muldenrahmens 3 angeordnet ist und dadurch dort durch den Muldenrahmen 3 geführt wird. Die Aufnahme ist dazu als Vertiefung 22 im sonst gegenüber dem Kochfeld 2 mm hochstehenden Rahmen 3 so ausgebildet, dass die Vertiefung 22 auf Höhe des Kochfelds 2 Liegt und am diesem bündig anschließt. In dieser Ansicht ist die Bereite der Vertiefung 22 zur einfacheren Darstellung vergrößert eingezeichnet.

Die Befestigung des Drehknebels 21 geschieht vorzugsweise magnetisch bzw. elektromagnetisch, die Abtastung seiner Stellung und / oder Position magnetisch. Die Befestigung und Abtastung abnehmbares Drehknebel als solches ist dem Fachmann bekannt.

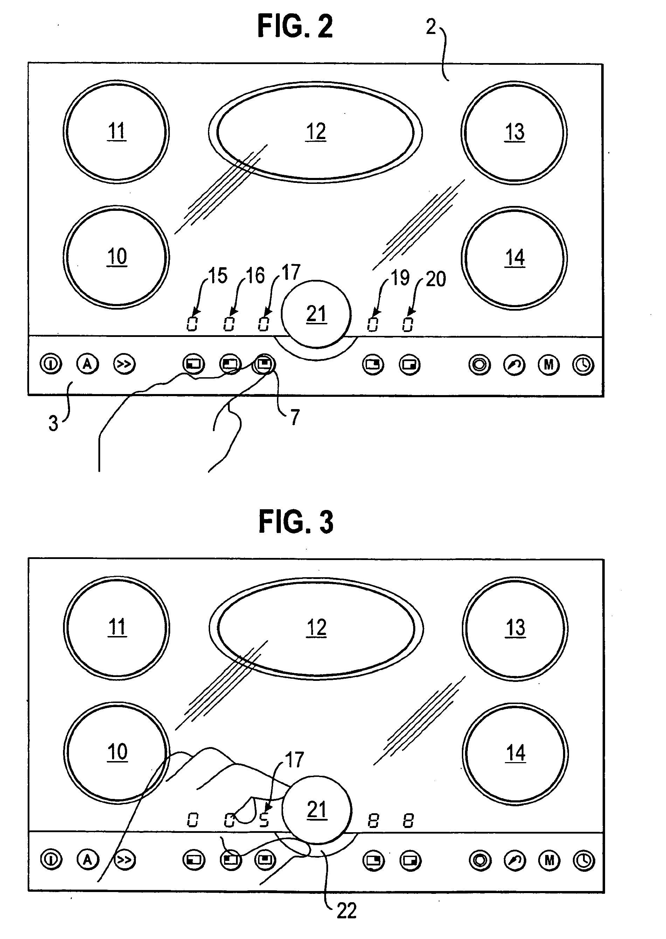

FIG 2 zeigt eine Konfiguration der Oberfläche des Herds 1 aus FIG 1 nach einen Einschalten über den Ein/Ausschalter 4, wodurch die Kochstufenanzeigen 15-17 und 19-20 leuchten. Durch Betätigung eines Aktivierungsschalters 7 (durch die Hand symbolisch angedeutet), hier für die mittlere Kochstelle 12, kann, wie in FIG 3 gezeigt, nun durch Drehen des Drehknebels 21 (durch die Hand symbolisch angedeutet) die Kochstufe für diese Kochstelle eingestellt werden. Durch den Rand der Vertiefung 22 wird die haptische Führung nach unten (zum Benutzer hin) und seitlich stark verbessert und zudem ein unbeabsichtigtes Gleiten erschwert.

Bei zweimaligem Drücken des Aktivierungsschalters 7 hätte die alternative Anzeige 18 (siehe FIG 1) die Kochstufe angezeigt.

Dabei kann der Drehknebel 21 auch so verwendet werden, dass beispielsweise eine Verschiebung in eine bestimmte Richtung eine zugehörige Aktion auslöst. So kann eine Auslenkung nach oben die Kochfeldansteuerung aktivieren, falls diese sich beispielsweise nach einer vorbestimmtem Zeitdauer ohne Betätigung, z. B. 10 s, ausstellt. Auch können verschiedene Richtungen verschiedene Aktionen auslösen; jedoch muss in dieser Ausführungsform zur Aktivierung irgendeiner Funktion der Ein/Ausschalter 4 betätigt sein. Selbstverständlich ist die vorliegende Ausführungsform nicht auf diese Betätigungsarten oder Funktionen beschränkt.

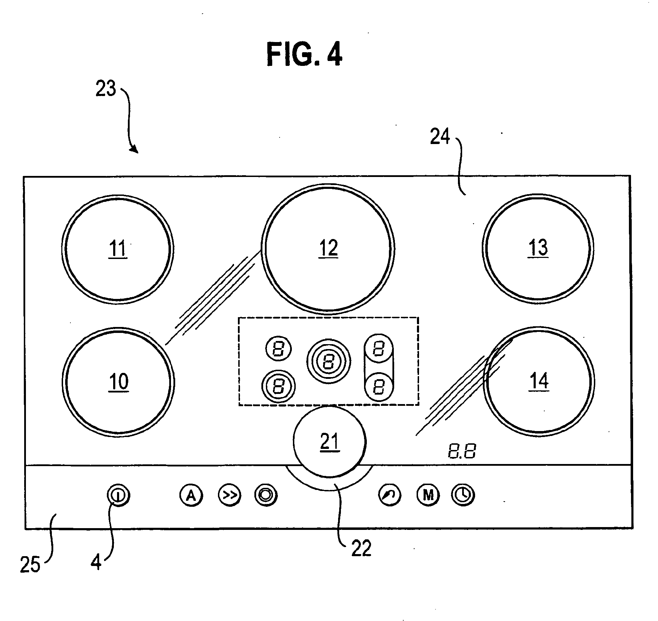

FIG 4 zeigt eine weitere Ausführungsform eines Herds 23, bei dem die Bedien- und Anzeigeelemente von Kochfeld 24 und Muldenrahmen 25 im Vergleich zu der ersten Ausführungsform anders konfiguriert sind. Hier sind die Aktivierungsschalter im Bereich der Anzeigefelder integriert und stellen dem Benutzer somit ein kombiniertes Bedien- und Anzeigefeld für jede Kochstelle dar, wie im gestrichelt eingezeichneten Bereich durch die fünf analog den Kochstellen angeordneten Teilfelder angedeutet. Hier werden nach Einschalten der Kochfunktion über den Ein/Ausschalter 4 (ggf. mit weiteren Symbolen und Anzeigen) die Kochstufenanzeigen eingeschaltet. Die Einstellung einer Kochstelle 10-14 geschieht durch Aktivierung mittels Berührung im Bereich der zugehörigen Kochstufenanzeige und folgendes Drehen des Drehknebels 21.

Sämtliche Bedien- und / oder Anzeigefelder können mit einem Dekor zur besseren Benutzerführung versehen sein.

Die Erfindung ist selbstverständlich nicht auf die in den Ausführungsbeispielen gezeigten Ausführungsformen beschränkt. So können die Kochstufenanzeigen weitere Parameter anzeigen, wie beispielsweise eine Timerfunktion, und dazu z. B. zweistellig ausgeführt sein. Insgesamt kann die Benutzerführung, inklusive der Ausgestaltung der Bedien- und / oder Anzeigeelemente beliebig an eine gewünschte Bedienphilosophie angepasst werden. Ferner ist das abnehmbare Bedienelement nicht auf einen Drehknebel beschränkt, sondern kann z. B. auch einen Schieber umfassen, dessen Verschiebung zumindest teilweise durch einen Rahmen geführt wird.

### Bezugszeichenliste

- 1: Herd
- 2: Kochfeld
- 3: Muldenrahmen
- 4: An/Aus-Schalter
- 5-9: Aktivierungsschalter
- 10-14: Kochstelle
- 15-20: Kochstufenanzeige
- 21: Drehknebel
- 22: randseitige Aufnahme
- 23: Herd
- 24: Kochfeld
- 25: Muldenrahmen

## Patentansprüche

1. Haushaltsgerät (1; 23) mit einer Oberfläche, die ein Kochfeld (2; 24), ein abnehmbar angebrachtes Bedienelement (21) und einen an das Kochfeld (2; 24) angrenzenden Muldenrahmen (3; 25) umfasst, und das Bedienelement (21) ein an dem Kochfeld (2; 24) abnehmbar angebrachter Drehknebel (21) ist
**dadurch gekennzeichnet, dass**
- der Drehknebel (21) zumindest teilweise mittels des Muldenrahmens (3; 25) so geführt wird, dass der Drehknebel (21) teilweise in einer randseitigen Aufnahme (22) des Muldenrahmens (3; 25) und teilweise auf dem Kochfeld (2; 24) angeordnet ist.

2. Haushaltsgerät (1; 23) nach Anspruch 1, **dadurch gekennzeichnet, dass** der Drehknebel (21) magnetisch befestigt ist.

3. Haushaltsgerät (1; 23) nach einem der vorhergehenden Ansprüche, **dadurch gekennzeichnet, dass** der Drehknebel (21) drehbar und verschieblich befestigt ist

4. Haushaltsgerät (1; 23) nach einem der vorhergehenden Ansprüche, **dadurch gekennzeichnet, dass** die Aufnahme eine Vertiefung (22) in dem Muldenrahmen (3; 25) ist.

5. Haushaltsgerät (1; 23) nach Anspruch 4, **dadurch gekennzeichnet, dass** die Vertiefung (22) an dem Kochfeld (2; 24) bündig anschließt.

6. Haushaltsgerät (1; 23) nach einem der vorhergehenden Ansprüche, **dadurch gekennzeichnet, dass** der Muldenrahmen (3; 25) gegenüber dem Kochfeld (2; 24) hochsteht, insbesondere zwischen 1 mm und 3 mm.

7. Haushaltsgerät (1; 23) nach einem der Ansprüche 1 bis 3 oder 6, **dadurch gekennzeichnet, dass** die Aufnahme eine Aussparung in dem Rahmen ist.

8. Haushaltsgerät (1; 23) nach einem der vorhergehenden Ansprüche, **dadurch gekennzeichnet, dass** das Kochfeld (2; 24) eine Glaskeramikplatte oder glaskeramikähnliche Platte aufweist.

## Claims

1. Domestic appliance (1; 23) with a surface, which comprises a cooker hob (2; 24), a removably mounted control element (21) and a hob frame (3; 25) adjoining the cooker hob (2; 24), and the control element (21) is a rotary knob (21) removably mounted on the cooker hob (2; 24),
**characterised in that**
- the rotary knob (21) is so guided at least in part by means of the hob frame (3; 25) that the rotary knob (21) is arranged partly in a mount (22), which is at the edge, of the hob frame (3; 25) and in part on the cooker hob (2; 24).

2. Domestic appliance (1; 23) according to claim 1, **characterised in that** the rotary knob (21) is fastened magnetically.

3. Domestic appliance (1; 23) according to one of the preceding claims, **characterised in that** the rotary knob (21) is fastened to be rotatable and slidable.

4. Domestic appliance (1; 23) according to any one of the preceding claims, **characterised in that** the mount is a recess (22) in the hob frame (3; 25).

5. Domestic appliance (1; 23) according to claim 4, **characterised in that** the recess (22) is flush with the cooker hob (2; 24).

6. Domestic appliance (1; 23) according to any one of the preceding claims, **characterised in that** the hob frame (3; 25) is elevated relative to the cooker hob (2; 24), in particular between 1 millimetre and 3 millimetres.

7. Domestic appliance (1; 23) according to any one of claims 1 to 3 and 6, **characterised in that** the mount is a cut-out in the frame.

8. Domestic appliance (1; 23) according to any one of the preceding claims, **characterised in that** the cooker hob (2; 24) comprises a glass-ceramic plate or a plate similar to glass-ceramic.

## Revendications

1. Appareil ménager (1 ; 23) pourvu d'une surface qui comprend une table de cuisson (2 ; 24), un élément de commande (21) monté de façon amovible et un cadre (3 ; 25) de table de cuisson, l'élément de commande (21) étant un bouton rotatif (21) monté de façon amovible sur la table de cuisson (2 ; 24),
**caractérisé en ce que**
le bouton rotatif (21) est guidé au moins partiellement au moyen du cadre (3 ; 25) de table de cuisson, de telle sorte que le bouton rotatif (21) est disposé en partie dans un logement (22) côté bord dudit cadre (3 ; 25) et en partie sur la table de cuisson (2 ; 24).

2. Appareil ménager (1 ; 23) selon la revendication 1, **caractérisé en ce que** le bouton rotatif (21) est monté magnétiquement.

3. Appareil ménager (1 ; 23) selon l'une des revendications précédentes, **caractérisé en ce que** le bouton rotatif (21) est monté de façon rotative et déplaçable.

4. Appareil ménager (1 ; 23) selon l'une des revendications précédentes, **caractérisé en ce que** le logement est une cavité (22) ménagée dans le cadre (3 ; 25) de table de cuisson.

5. Appareil ménager (1 ; 23) selon la revendication 4, **caractérisé en ce que** la cavité (22) est à ras de la table de cuisson (2 ; 24).

6. Appareil ménager (1 ; 23) selon l'une des revendications précédentes, **caractérisé en ce que** le cadre (3 ; 25) est surélevé par rapport à la table de cuisson (2 ; 24), en particulier de 1 mm à 3 mm.

7. Appareil ménager (1 ; 23) selon l'une des revendications 1 à 3 ou 6, **caractérisé en ce que** le logement est un évidement ménagé dans le cadre.

8. Appareil ménager (1 ; 23) selon l'une des revendications précédentes, **caractérisé en ce que** la table de cuisson (2 ; 24) comporte une plaque vitrocéramique ou une plaque similaire à la plaque vitrocéramique.
